# EUROPEAN PATENT SPECIFICATION

(11) **EP 3 538 845 B1**
(45) Date of publication and mention of the grant of the patent: **13.04.2022**
(21) Application number: 17809381.1
(22) Date of filing: 10.11.2017
(51) Int. Cl.: G01C 21/20

(54) **METHOD FOR SUPPORTING THE APPROACH MANEUVER OF A BOAT TO THE MOORING SITE WITHIN A PORT AREA AND SYSTEM THEREOF**
VERFAHREN ZUR UNTERSTÜTZUNG DES ANNÄHERUNGSMANÖVERS EINES BOOTES AN DIE VERTÄUUNGSSTELLE IN EINEM HAFENBEREICH UND SYSTEM DAFÜR
PROCÉDÉ DE PRISE EN CHARGE DE LA MANOEUVRE D'APPROCHE D'UN BATEAU SUR LE SITE D'AMARRAGE DANS UNE ZONE DE PORT ET SYSTÈME ASSOCIÉ

(30) Priority: 10.11.2016 IT 201600113495
(43) Date of publication of application: 18.09.2019
(73) Proprietor: Seastema S.p.A., 16129 Genova (IT)
(72) Inventor: SEBASTIANI, Luca, 16129 Genova (IT); CHITI, Roberto, 16129 Genova (IT)
(74) Representative: Mozzi, Matteo
(86) International application number: PCT/IB2017/057033
(87) International publication number: WO 2018/087702

(56) References cited:
- EP-A2- 2 878 528
- DE-A1-102009 046 676
- US-A1- 2006 089 794
- US-A1- 2008 201 029
- US-A1- 2013 080 044

## Description

### Field of application

The present invention relates to the field of systems for planning and controlling the course of a boat in confined waters, and in particular to a method for supporting the approach maneuver of a boat to the mooring site within a port area and to a system thereof.

### Technological background

It is known that all boats of a given size, including yachts, are equipped with electronic map management systems, such as, for example, systems capable of loading, viewing and interacting with the digital maps of given sea and/or port areas (ENC, standing for *Electronic Navigational Chart*) or certified systems for planning and validating a course from a starting point to a destination point (ECDIS, standing for *Electronic Chart Display and Information System*)*.*

It is also known that the aforesaid boats are equipped with navigation assistance systems, named "autopilots", for automatically controlling the steering gear in order to hold the bow along the direction of the conjunction line between the starting point and the destination point without requiring the operator's continuous operation on physical controls.

It is also known that some boats, according to size and operative profile, are equipped with navigation assistance systems, named *track-pilots,* for automatically controlling the steering gear in order to hold the boat along a course, described in terms of a sorted sequence of way points, defined and validated by means of the aforesaid ECDIS-type electronic map systems.

Furthermore, it is also known that some boats, e.g. Offshore Supply Vessels in the Oil & Gas sector, cable layer ships in the mercantile sector and mine hunters in the military sector, are equipped with low-speed maneuver assistance systems, named *Track Keeping* or *Dynamic Tracking* systems, which allow the ship to automatically hold a predetermined track according to a preprogrammed speed by means of the coordinated action of all the available actuators.

The approach maneuver to the mooring area, e.g. in the case of a large-size luxury boat (also known as *Mega-Yacht* or *MY*) in a very busy marina in unfavorable wind conditions, is a tricky condition which implies a high risk of collision into the quay or other vessels, and therefore requires high seafaring experience and skills which are not always available on boats of this type.

It is known that driver assistance systems have been made available in the automotive field. For example, the so-called *Collision Avoidance System* makes it possible to automatically apply emergency braking by means of the distance feedback of one or more distance sensors, preferentially of radar type, integrated in the front part of the vehicle body. The so-called *Lane Assist System* monitors the passing of the line separating two lanes and makes it possible to automatically return the vehicle to the lane by means of the integrated feedback of a set of distance sensors, preferably of optical type.

However, the completely different scenario, in terms of vehicle dynamics, operative context and surrounding environment, means that these systems are not applicable to mooring maneuver of a boat on the quay.

With this regard, variants of the aforesaid Dynamic Tracking systems have been suggested aimed at supporting the approach maneuver of a boat to the mooring area by means of specific implementations of the planning and automatically course planning functions.

Nowadays, in a continual evolution of the boat course planning and control systems, the need is strongly felt to be able to guarantee a mooring maneuver of a boat to a mooring area within a port area, which is as prompt, accurate and reliable as possible, possibly also in bad weather conditions (e.g. unfavorable winds) from the area chosen for starting the mooring maneuver to the position for mooring on the quay.

EP 2878528 A2 discloses a method for motor-driven mooring with a ship at a mooring in a mooring area.

### Summary

It is the object of the present invention to devise and make available a method for supporting the approach maneuver of a boat to a mooring site within a port area which makes it possible to avoid at least partially the drawbacks described above with reference to the known art and in particular which can fulfill the aforesaid need as much as possible.

Such object is achieved by a method according to claim 1.

It is a further object of the present invention a system for supporting the approach maneuver of a boat to the mooring site within a port area according to claim 12.

### Brief description of the figures

Further features and advantages of the method and system according to the invention will be apparent from the following description of preferred embodiments, given by way of indicative, non-limiting examples, with reference to the accompanying figures, in which:
- figure 1 shows, by means of a functional block chart, a system for supporting the approach maneuver of a boat to the mooring site within a port area, according to an embodiment of the invention;
- figure 2 diagrammatically shows an example of boat with some components of the system in figure 1;
- figure 3 shows, by means of a block chart, a method for supporting the approach maneuver of a boat to the mooring site within a port area, according to an embodiment of the invention;
- figure 4 diagrammatically shows a digital map representing a port area, which can be used in the method of figure 1;
- figures 5, 6, 7 and 8 diagrammatically show a portion of the digital map of figure 1, in which the respective steps of the method of the present invention are shown according to different embodiments;
- figures 9 to 11 diagrammatically show portions of digital maps in which the respective steps of the method of the present invention are shown according to further different embodiments, and
- figures 12 and 13 diagrammatically show a flat geographic reference system in which the elements that can be used and processed in the method of the present invention are symbolically shown according to a further embodiment.

### Detailed description

It is worth noting that equal or similar elements in the figures will be indicated by the same numeric and/or alphanumeric references.

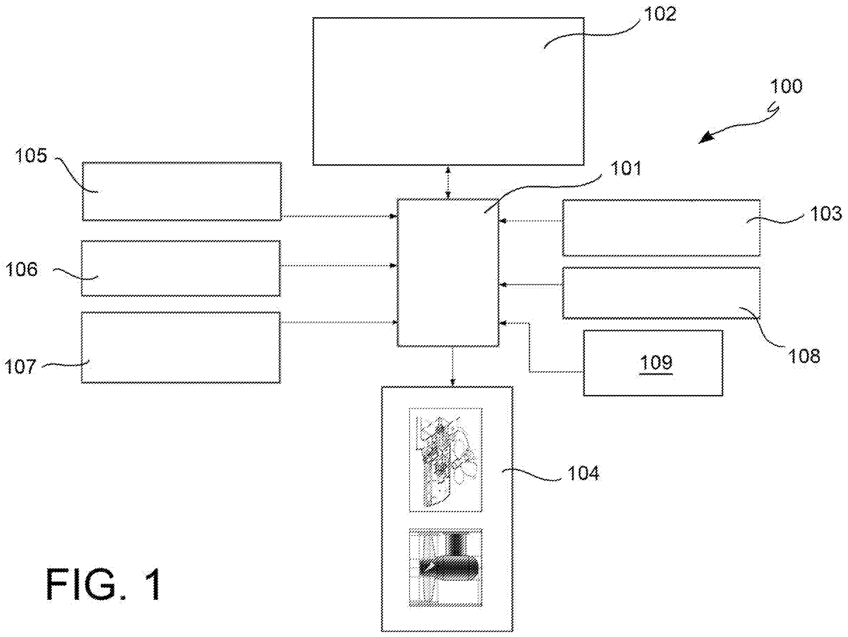

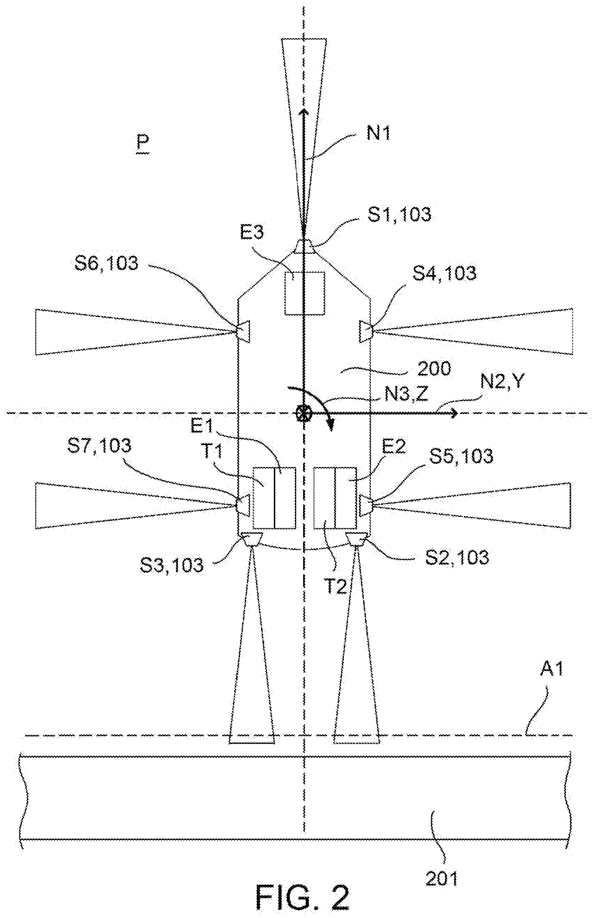

A system 100 for supporting the approach maneuver of a boat to the mooring site within a port area, according to an embodiment of the invention, will now be described with reference to figures 1 and 2.

For the purposes of the present invention, "approach maneuver" of a boat to a mooring area means an approach maneuver of the boat to a mooring area intended for the boat before entering the port area.

With particular reference to figure 2, it is worth noting that the boat, indicated by reference numeral 200 in the figures, is adapted to execute the approach maneuver on a respective maneuvering plane P1, corresponding to the water plane.

More in detail, the boat 200 has a first reference axis N1 (e.g. the longitudinal axis, also indicated as axis "X") passing through the boat center and orientated forward, a second reference axis N2 (also indicated as axis "Y") passing through the boat center, orthogonal to the first axis N1 and oriented starboard, the first axis N1 and the second axis N2 lie on the maneuvering plane P1, a third reference axis N3 (also indicated as axis "Z") passing amidship and oriented downwards, orthogonal to the maneuvering plane P.

For the purposes of the present invention, boat means any naval or nautical vessel, of small size (up to 30 meters long) or of large size (up to 80 meters or longer), which requires a specific mooring semi-automatic, automatic or manual maneuver, with respect to one or more objects arranged on the maneuvering plane P.

With reference to figure 1, the system 100 comprises a first data processing unit 101, e.g. a microcontroller or a microprocessor.

The system 100 further comprises a first storage unit (not shown in the figures), either inside or outside the first data processing unit 101, configured to store both program codes (control logics) which can be loaded and executed by the first data processing unit 101 to implement the method for supporting the approach maneuver of a boat to the mooring site within a port area, described below, and the data acquired and processed by the data processing unit 101 during the implementation of the aforesaid method and of any other automatic function, the execution of which is performed by the first data processing unit 101.

In other words, the system 100 is configured to execute the method for supporting the approach maneuver of a boat to the mooring site within a port area, described below with reference to different embodiments.

The system 100 further comprises a control panel 102 for an operator, operatively connected to the first data processing unit 101.

The control panel 102 is configured to allow an operator to impart instructions and/or commands to the first data processing unit 101 and, consequently to the components of the system 100 operatively connected to it, as will be described below.

With this regard, the control panel 102 preferably comprises a plurality of physical controls, comprising, for example, a joystick type lever with three degrees of freedom having a lever for the two horizontal degrees of freedom, i.e. parallel to the maneuvering plane P of the boat 200, and a knob for the rotational third degree of freedom, i.e. vertical with respect to the maneuvering plane P of the boat 200, and a plurality of push buttons.

The control panel 102 further comprises a monitor, preferably implementing touchscreen technology, to allow the operator to interact with the first data processing unit 101 and view the processed data.

Turning back to figure 1, the system 100 further comprises a plurality of distance sensors 103, each of which is operatively connected to the first data processing unit 101.

With reference now also to figure 2, each distance sensor of said plurality of sensors 103 is operatively configured to detect a relative distance between the distance sensor and an object 201 (diagrammatically shown) along a direction inclined with respect to a reference axis of the boat 200 by a set angle.

"Object" means any object developing parallel to the first reference axis A1 (shown in figure 2 by a dashed line) of the maneuvering plane P of the boat 200, that the boat 200 must approach during the mooring maneuver and once it is completed. Examples of the object 201 may be the quay of a harbor, the side of another boat, the stern of another boat, and so on.

It is worth noting that each distance sensor of said plurality of distance sensors 103 is configured to transmit a respective measuring signal along the direction inclined with respect to the reference axis of the boat 200 by a set angle.

It is worth noting that in the case of a distance sensor arranged afore or astern, the reference axis is the first reference axis N1 of the boat 200 (also indicated as axis "X"), while in the case of a distance sensor arranged on the left or starboard, the reference axis of the boat 200 is the second reference axis N2 (also indicated as axis "Y").

Each distance sensor of the plurality of distance sensors 103 is preferably of the Radar type or other equivalent technology capable of ensuring a measuring range having as lower limit no less than 1 meter and as upper limit at least 100 meters for small-sized boats and at least 300 meters for large-size boats, with a measuring accuracy lower than 0.1 meters in the case of stationary objects or obstacles (e.g. the quay of a harbor or a moored boat).

With regards to the distribution of the plurality of distance sensors 103, the system 100 is modular because advantageously such distribution may freely vary in number and position along the outer perimeter of the hull of the boat 200 providing that an adequate covering of the sides of the boat 200 concerned by the mooring to the quay is ensured.

With reference to the example in figure 2, in the case of a large-sized boat 200, the plurality of distance sensors 103 preferably comprises seven distance sensors: a first distance sensor S1 arranged afore, on the center of the boat 200; a second distance sensor S2 and a third distance sensor S3 located astern, respectively on the starboard and left side of the boat 200; a fourth distance sensor S4 and a fifth distance sensor S5 arranged on the right side of the boat 200, afore and astern respectively; a sixth distance sensor S6 and a seventh distance sensor S7 arranged on the left side of the boat, afore and astern respectively.

According to an embodiment, each distance sensor of the plurality of distance sensors 103 is removable and provided with an appropriate mechanical system for coupling outside the hull and adjusting the height / tilt to ensure the adequate coverage of the environment surrounding the boat 200.

According to another embodiment, alternative to the one above, each distance sensor of the plurality of distance sensors 103 is fixed and integrated in the exterior plating of the hull of the boat 200 at a set height with respect to the water level to avoid interferences with the wave surface and guarantee a sufficient margin for the floating variations of the boat 200.

Turning back in general to the system 100 of the embodiment of figure 1, the system 100 further comprises a plurality of actuators 104, each of which is operatively connected to the first data processing unit 101.

An actuator of said plurality of actuators 104 is configured to apply one or more forces at a distance sensor of said plurality of sensors 103 along a force application direction inclined with respect to the reference axis N1 (or N2) of the boat 200, indicated also as axis "X" (or as axis "Y") by a set angle, in order to move the boat 200.

Examples of actuators are an in-line stern thruster, a rudder, a maneuvering thruster, and so on.

With regards to the configuration and the distribution of the plurality of actuators 104 on the boat 200, the system 100 is compatible with any configuration of actuators, i.e. without distinction of number, type and collocation, providing they can satisfy the same requirements posed for the dynamic positioning systems, i.e. providing the configuration of the actuators is capable of independently generating a given longitudinal force, a given transverse force and a given moment with respect to a vertical reference axis (not shown in the figures) passing through the center of the boat and orthogonal with respect to the maneuvering plane P.

In this manner, the system 100 can advantageously control the longitudinal motion, the transverse motion and the direction of the bow of the boat 200 in independent manner.

Again with reference to the example of figure 2, typical for many large-size boats, the plurality of actuators 104 of the system 100 is distributed according to a set configuration which comprises: a first in-line stern thruster E1 and a second in-line stern thruster E2 arranged, respectively, on the left and starboard side of the boat 200, for the main propulsion forwards and backwards; a first rudder T1 and a second rudder T2, arranged respectively behind the first stern thruster E1 and the second stern thruster E2, for the main control of the bow of the boat 200; a bow thruster E3, for supporting the control of the bow of the boat 200 in case of slow advancement speeds.

According to a further embodiment, shown in figure 1, the system 100 further comprises a direction reference sensor 105 of the boat 200 with respect to the first reference axis N1, the second reference axis N2 (passing through the maneuvering plane P) and to the third reference axis N3 (orthogonal to the maneuvering plane P) defined above.

The aforesaid direction reference sensor 105 of the boat 200 is operatively connected to the first data processing unit 101.

An example of a three-axis direction reference sensor 105 is a triaxial gyroscope sensor.

It is worth noting that the at least one direction reference sensor 105 of the boat 200 is configured to detect, along the first reference axis N1, the angular rolling motion, along the second reference axis N2, the angular pitch motion, along the third reference axis N3, the angular motion of the bow.

According to a further embodiment, shown in figure 1, the system 100 further comprises a position reference sensor 106 of the boat 200 on the maneuvering plane P, operatively connected to the first data processing unit 101.

An example of position reference sensor 106 on the maneuvering plane P is a DGPS type sensor (standing for *Differential Global Positioning System*) for measuring the position of the boat on a XY plane (e.g. the maneuvering plane P) with respect to land.

According to a further embodiment, shown in figure 1, the system 100 further comprises at least one environmental reference anemometric type sensor 107, operatively connected to the first data processing unit 101.

An example of environment reference sensor 107 is a 2D ultrasound sensor for detecting wind speed and direction striking the boat 200, with respect to the maneuvering plane P and to the first reference axis N1 of the boat 200.

Furthermore, according to a further embodiment, shown in figure 1, the system 100 comprises a video unit 108, operatively connected to the first data processing unit 101, configured to acquire a 360° view of the environment surrounding the boat 200.

Examples of video unit 108 are one or more cameras mounted on one or more masts of the boat 200 or an aerial drone provided with orientable camera.

According to the embodiment in figure 1, the system 100 further comprises a second data processing unit 109, e.g. a microprocessor or a microcontroller, operatively connected to the first data processing unit 101.

The system 100 further comprises a second storage unit (not shown in the figures), either inside or outside the second data programming unit 109, configured to store both program codes (control logics) which can be loaded and executed by the second data processing unit 109 to implement a simulation model of the approach maneuver of a boat to a mooring area within a port area that can be used in a method for supporting the approach maneuver of a boat to the mooring site of a port area, described hereinafter, both the data acquired and processed by the second data processing unit 109, in particular, the results of the maneuver simulations performed by the operator by means of the aforesaid simulation model.

The dynamic simulation model is configured to reproduce an approach maneuver of the boat 200 to a mooring area within a port area on the basis of information representative of the aforesaid mooring maneuver provided by an operator and of information representative of the weather conditions of the port area.

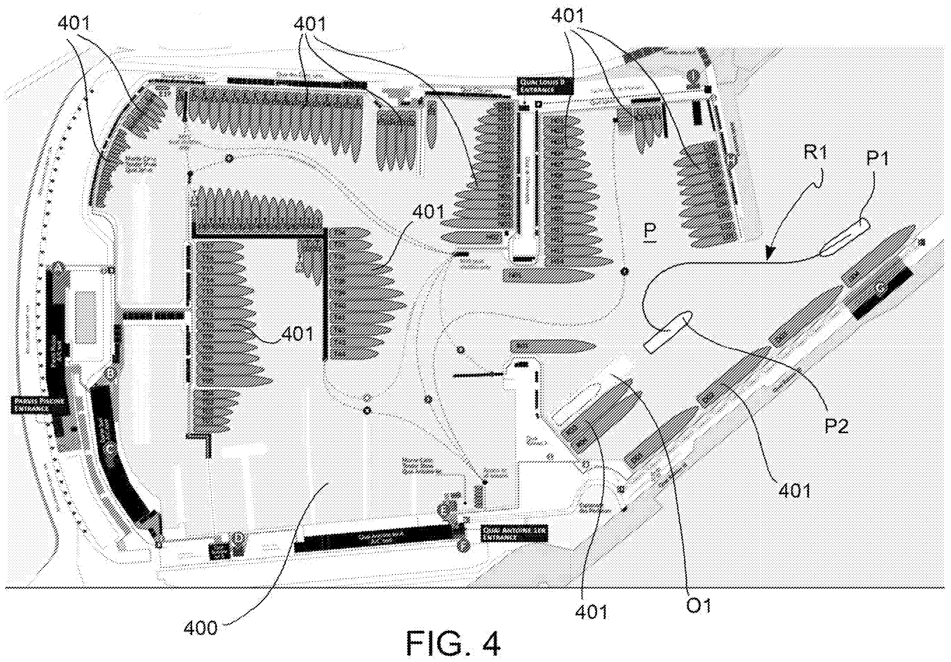

Furthermore, the second storage unit further comprises a plurality of digital maps representative of port areas within which the boat 200 may perform an approach maneuver to a respective mooring site. An example of digital map of the aforesaid plurality of digital maps is shown in figure 4.

According to an embodiment, the second data processing unit 109 is configured to allow the superimposition of additional data manually set by the operator on a digital map representative of a port area to describe a set course to be followed during a set approach maneuver of the boat 200 to a mooring site on the basis of information provided to the boat 200 before entering in the port area by the quay manager by means of communication systems installed aboard the boat 200.

It is worth noting that both the dynamic simulation model and the plurality of digital maps can be loaded and executed by the fist data processing unit 101 during the execution of the method for supporting the approach maneuver of a boat to a mooring site within a port area.

Indeed, turning back in general to the system 100 in figure 1, it is worth noting that the first data processing unit 101 is configured to execute the steps of the method for supporting the approach maneuver of a boat to a mooring site within a port area described below.

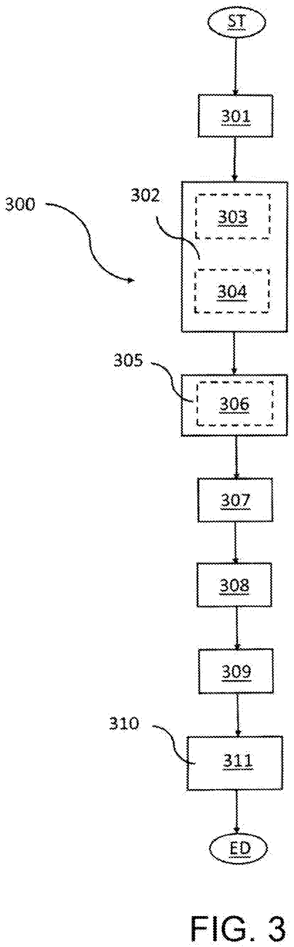

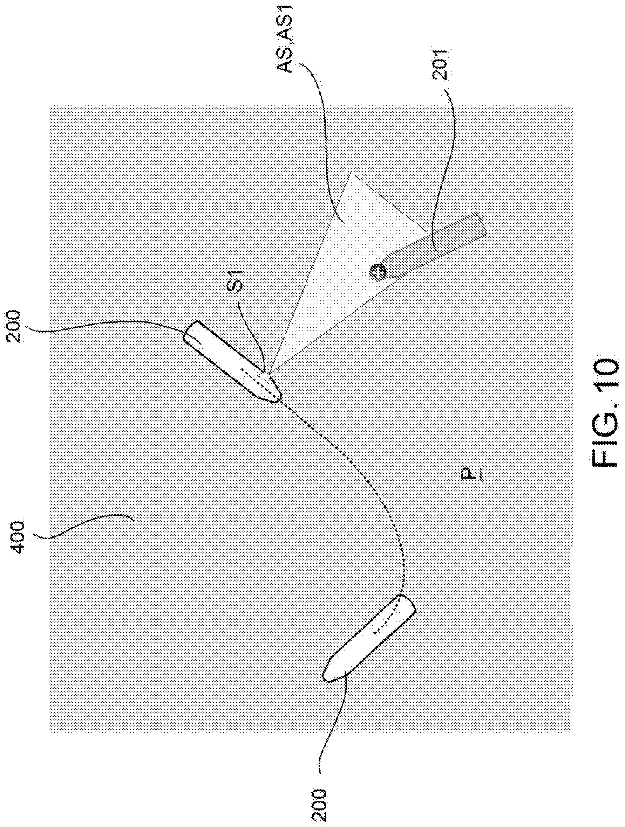

A method 300, as shown in figure 3, for supporting the approach maneuver of a boat 200 to the mooring site within a port area, hereinafter also automatic control method or simply method, will now be described with reference also to figures 3-13.

With reference to figure 4, a port area 400 comprises a plurality of mooring areas (or sites) 401 distributed within the port area (or zone) 400, along one or more mooring quays. In the example in figure 4, many of the mooring areas (or sites) of the plurality of mooring areas 401 are occupied by a respective moored boat.

It is worth noting that the water surface in the port area 400 represents the maneuvering plane P of the boat 200.

Furthermore, again with reference to figure 4, the approach maneuver 200 may be executed along a set course R1 from a set first position P1 to a set second position P2.

At the end of the approach maneuver, the set second position P2 is adjacent to, i.e. near, a mooring area O1, belonging to the aforesaid plurality of mooring areas 401, of the boat 200.

Turning back to figure 3, the method 300 comprises a symbolic step of starting ST.

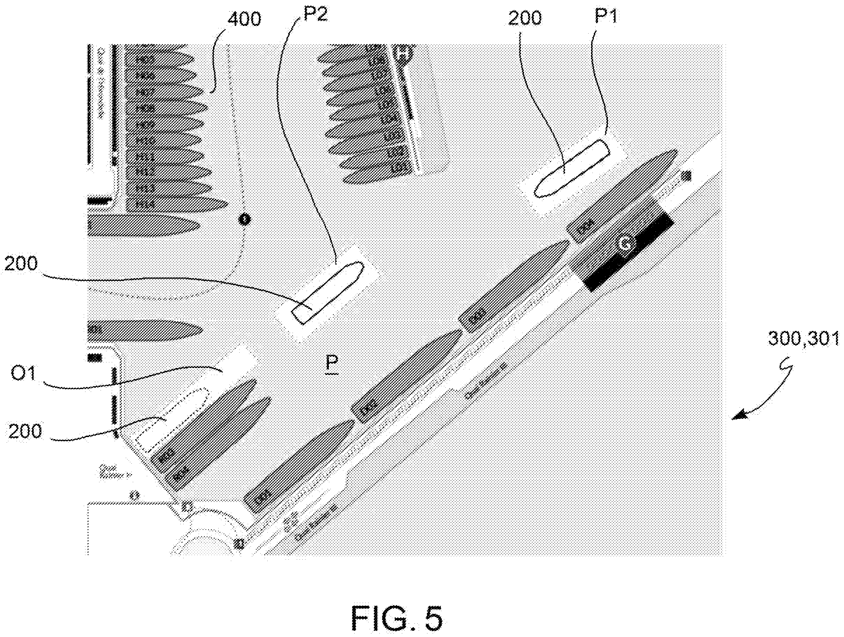

The method 300 further comprises a step of setting 301, by a first data processing unit 101 upon instructions provided by an operator by means of a control panel 102 of a first data processing unit 101, the first position P1 and the second position P2 of the set course R1. Also see figure 5 with this regard.

So, the instructions that the operator can provide to the first data processing unit 101 in this step of setting 301 are indicative of the first position P1 and of the second position P2 of the set course R1.

Indeed, such step of setting 301 materializes, for example, in digitally indicating the first position P1 and the second position P2 on a digital map representative of the port area 400.

The method 300 further comprises a step of setting 302, by the first data processing unit 101 upon instructions provided by an operator by means of a control panel 102 of the first data processing unit 101, the set course R1.

So, the instructions that the operator can provide to the first data processing unit 101 in this step of setting 302 are indicative of the set course R1.

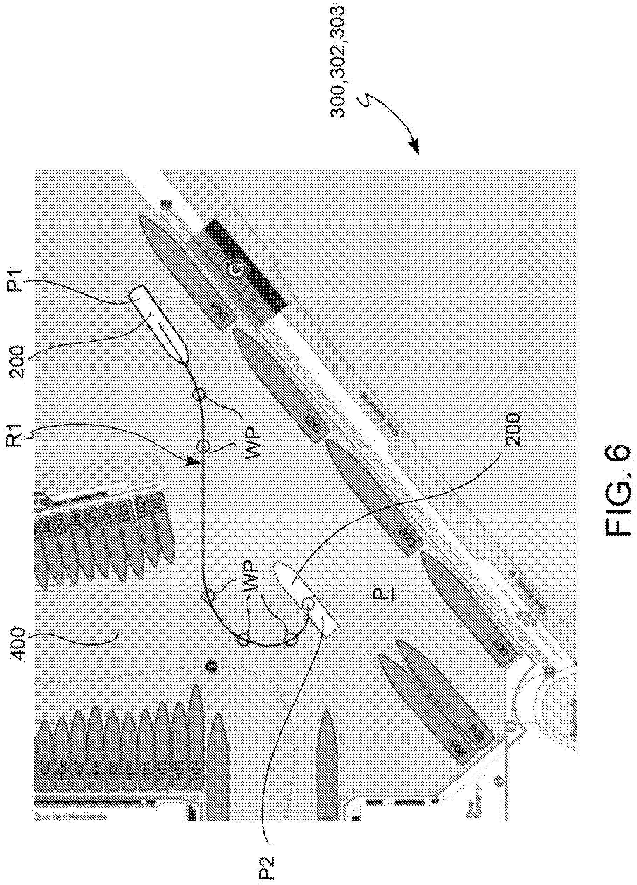

In an embodiment, shown in figure 6, the step of setting 302 the set course R1 comprises a step of setting 303, by the first data control unit 101 upon instructions provided by the operator by means of the control panel 102 of the first data processing unit 101, a plurality of points WP distributed on the set course R1.

The distribution of the plurality of points WP is set as a function of a set course previously set by the operator on the basis of his or her seafaring experience and/or of a series of information representative of the port area 400, such as, for example, the configuration of the port area (or zone), the presence of other boats, the mooring area (or site) and the weather. An example is shown in figure 6.

It is worth noting that such step of setting 303 the plurality of points WP materializes in digitally indicating the plurality of points WP on the digital map representative of the port area 400.

In an embodiment, in combination with any one of those described above, after the step of setting 303 the plurality of points WP, the step of setting 302 the set course R1 comprises a step of assigning 304, by the first data processing unit 101 upon instructions provided by the operator by means of the control panel 102 of the first data processing unit 101, to each point of the plurality of points WP a first value representative of the advancement speed of the boat and a second value representative of the direction of advancement of the boat 200 with respect to the maneuvering plane P.

Therefore, the instructions that the operator can provide to the first data processing unit 101 during this step of assigning 304 are indicative of the set course R1 of a first value representative of the advancement speed of the boat and of a second value representative of the advancement direction of the boat 200 with respect to the maneuvering plane P to be assigned to each point of the plurality of points WP.

It is worth noting that each first value representative of the advancement speed of the boat 200 and each second value representative of the advancement direction of the boat 200 with respect to the maneuvering plane P are previously set by the operator according to his or her seafaring experience and/or a series of information representative of the port area 400.

Turning back to the embodiment in figure 3, the method 300 further comprises a step of simulating 305, by a first data processing unit 101 upon instructions provided by an operator by means of a control panel 102 of a first data processing unit 101, the set course R1 of the boat 200 from the first position P1 to the second position P2.

This step of simulating 305 is achieved by implementing, by the second data processing unit 109, operatively connected to the first data processing unit 101, a dynamic simulation model configured to reproduce a mooring maneuver of the boat 200 on the maneuvering plane P at least on the basis of the set weather conditions of the port area 400.

In an embodiment, the step of simulating 305 comprises a step of providing 306, by the first data processing unit 101 upon instructions provided by the operator by means of the control panel 102 of the first data processing unit 101, the set weather conditions of the port area 400 to the second data processing unit 109 operatively connected to the first data processing unit 101.

Such set weather conditions of the port area 400 may be provided by the quay manager by means of communication systems installed aboard the boat 200 or obtained from weather forecasts.

It is worth noting that the fact that the envisaged scenario is to execute approach maneuvers to mooring areas within a port area, i.e. within a protected area, makes it possible to include only the effect of the wind in the dynamic simulation model, obviously neglecting any effects of the sea and of the sea current.

The possible effect of residual swell in the port area may however be filtered by the first data processing unit 101 during a step of automatically executing the approach maneuver to the mooring site, described below, so as not to interfere with a feedback command provided during the aforesaid step of simulating 305. Therefore, the possible effect of residual swell must not be modeled in the simulation.

For a more realistic reproduction of the wind action, the effect of the gusts is included in the dynamic simulation model by means of a spectral representation of wind speed fluctuations with respect to the nominal value of 10 m above sea level.

The step of simulating 305 is performed by the first data processing unit 101 upon instructions supplied by the operator by means of the control panel 102 of the first data processing unit 101 used to virtually execute an approach maneuver of the boat 200 to the mooring area O1 along the set course R1 from the first position P1 to the second position P2.

Obviously, such simulation may be repeated several times until the set course R1 from the first position P1 to the second position P2 is executed in a manner deemed satisfactory and optimal by the operator.

In an embodiment, not shown in figure 3, in combination with any one of those described above, the step of simulating 305 is executed, by the first data processing unit 101, upon instructions provided by the operator in offline mode before the boat 200 enters the port area.

This makes it possible to reproduce the set maneuvering approach of the boat to the mooring area for the actual mooring configuration and actual wind conditions at the mooring area in a realistic virtual environment.

According to an embodiment, not shown in figure 3, in combination with any one of those described above, the operator may provide instructions to the first data processing unit 101 by means of the control panel 102 to execute the simulation of the desired approach maneuver, both in real time and in accelerated time, by physically interacting with the dynamic simulation model by means of the control panel 102 of the first data processing unit 101.

According to an embodiment, now shown in figure 3, in combination with any one of those described above, the step of simulating 305 comprises a step of showing to the operator for a visual comparison, by the control panel 102 of the first data processing unit 101, on a digital map representative of the port area 400, the simulated approach maneuver of the boat to the mooring area with respect to the approach maneuver of the boat to the mooring area previously set on the digital map representative of the port area 400.

According to an embodiment, not shown in figure 3, in combination with any one of those described above the step of simulating 305 is executed in a continuous manner by the second data processing unit 109 on the basis of the dynamic simulation model, in order to project forward in time the position and the arrangement (advancement speed and advancement direction with respect to the maneuvering plane P) of the boat 200 on the basis of the weather conditions and current commands of the boat 200.

It is worth noting that, for example, the step of simulating 305 may be executed by projecting forward the position and arrangement of the boat 200 by one minute with respect to the current time.

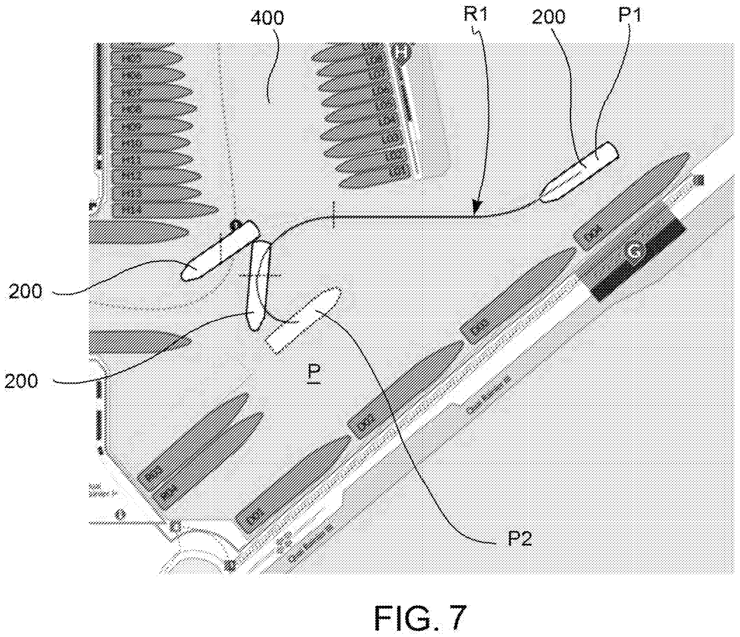

As shown by way of example in figure 7, during the simulation, the aforesaid information may be advantageously displayed on the digital map of the port area 400 in order to support the operator in the decision to take concerning setting the simulated maneuver.

Turning back to figure 3, the method 300 further comprises a step of storing 307, by the first data processing unit 101 upon instructions provided by the operator by means of the control panel 102 of the first data processing unit 101, the simulated set course R1 in a first storage unit operatively associated with the first data processing unit 101.

According to an embodiment, not shown in the figures, the step of storing 307 the simulated set course R1 comprises a step of storing a sequence of said first value representative of the advancement speed of the boat 200 and a second value representative of the advancement direction of the boat 200 with respect to the maneuvering plane P, representative of the simulated set course R1.

According to an embodiment, not shown in figure 3, in combination with any one of those described above, the method 300 may comprise a step of loading, by the first data processing unit 101, upon request of the operator by means of the control panel 102, a set course R1 stored in the first storage unit.

It is worth noting that such set course R1 may be a simulated set course R1 or a set course R1 previously set by the operator.

According to an embodiment, the step of loading the stored set course R1 comprises a step of loading a sequence of said first advancement speed value of the boat 200 and a second value of the advancement direction of the boat 200 with respect to the maneuvering plane P stored in the first storage unit.

According to an embodiment, not shown in figure 3, in combination with any one of those described above, the method 300 comprises a step of executing, by the first data processing unit 101, an approach maneuver of the boat to the mooring area on the basis of the set course R1 loaded from the first storage unit in offline mode.

With this regard, and in greater detail, in offline mode, the first data processing unit 101, configured to execute the method for supporting the approach maneuver of the boat to the mooring area, enables communication with the second data processing unit 109, connected to the second storage unit in which the dynamic simulation model is stored, and disables communication with the plurality of actuators 104.

In this manner, the control of the approach maneuver of the boat to the mooring area, by the first data processing unit 101 and described in detail below, is not physically implemented on the boat 200 but on the dynamic simulation model of the boat itself, and the results of such further simulation are displayed on the digital map representative of the port area 400 for additional support to the operator in setting the approach maneuver of the boat to the mooring area.

Turning back to figure 3, the method 300 further comprises a step of conducting 308, by the first data processing unit 101 upon instructions provided by an operator by means of a control panel 102 of a first data processing unit 101, the boat 200 in the first position P1 of the set course R1.

Furthermore, the method 300 comprises a step of loading 309, by the first data processing unit 101, upon request by the operator by means of the control panel 102, the simulated set course R1 stored in the first storage unit.

The method 300 further comprises a step of executing 310, by the first data processing unit 101, an approach maneuver of the boat 200 to the mooring area from the first position P1 to the second position P2, on the basis of the set course R1 loaded by the first data processing unit 101.

The step of executing 310 comprises a step of controlling 311, by the first data processing unit 101, the approach maneuver of the boat 200 to the mooring area O1 by comparing the course executed by the boat with the set course R1 loaded by the first data processing unit 101.

In greater detail, in an embodiment, the step of controlling 311 is executed by the first data processing unit 101, in online mode.

According to the online mode, the first data processing unit 101 directly controls a plurality of actuators 104 on the basis of a track error signal in the course which may be detected by comparing the course executed by the boat with the set course loaded by the first data processing unit 101.

Therefore, the control of the boat 200, in this case, is therefore physically implemented on the boat 200, advantageously allowing it to execute the approach of the boat 200 to the mooring area O1 in fully automatic manner.

According to one embodiment, in combination with any one of these described above, the comparison of the course performed by the boat 200 with the set course loaded by the first data processing unit 101 can be performed by the operator visually on the digital map displayed on the control panel 102, in order to support the decision on how to proceed with the approach maneuver of the boat 200 to the mooring area O1 itself.

By way of example, in the event of possible interference with external obstacles, such as other boats, quays or other structures present in the port area 400, the operator may decide to interrupt the automatic execution and return to semi-automatic or fully manual control of the boat 200.

According to an embodiment, not shown in figure 3, in combination with any of those described above, the step of controlling 311 comprises a step of continuously monitoring, by the first data processing unit 101, during the approach maneuver of the boat 200 to the mooring area O1, the feedback of the plurality of distance sensors 103 installed on the boat 200 in order to assist the operator in avoiding possible collisions with possible obstacles along the set course R1.

According to an embodiment, in combination with any one of the those described above, the step of controlling 311 further comprises a step of predicting, by the first data processing unit 101 on the basis of the dynamic simulation model, during the approach maneuver of the boat 200 to the mooring area O1, a set minimum stopping distance of the boat 200 in the current conditions, the order of several boat lengths, both in case of straight emergency stop maneuver (also named crash stop) and in case of maximum steering angle emergency stop, left and starboard respectively.

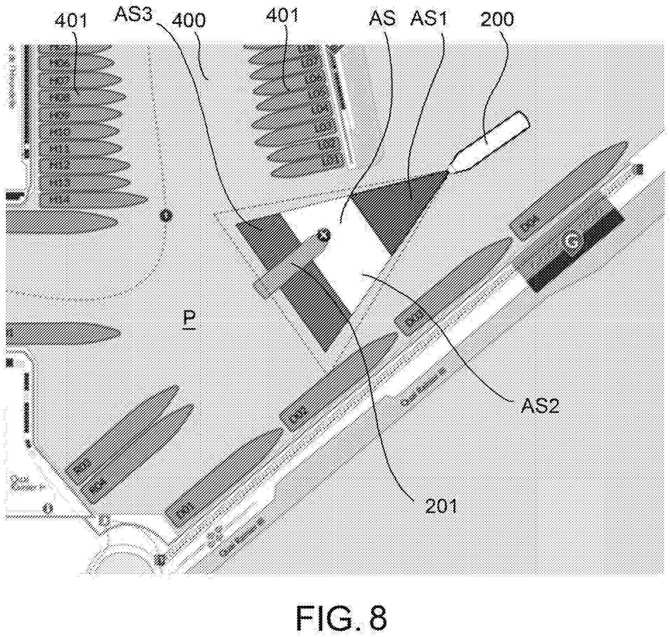

With reference also to figure 8, in accordance with a further embodiment, in combination with any one of those described above, the method 300 further comprises a step of graphically displaying, by the first data processing unit 101, on the digital map representative of the port area 400, a current safety area AS of the boat 200 with respect to an obstacle 201 superimposed on the detection sector of the bow distance sensors of the plurality of sensors 103 of the boat 200.

The safety area AS, for example triangle- or cone-shaped, is reconstructed on the basis of the predictions of the dynamic simulation model.

Again, with reference to figure 8, the safety area AS comprises: a first sector AS1, for example shown by a first color, representative of a first area swept by the boat in the case of a crash stop maneuver started in the current moment; a second sector AS2, for example in a second color, representative of a "caution" area of given length, e.g. equal to one boat length, adjacent to the first sector AS1; a third sector AS3, e.g. in a third color, representative of the detection area of the bow distance sensors of the plurality of sensors 103 adjacent to the second sector AS2 on the opposite part of the first sector AS1.

According to a further embodiment, in combination with the one above, the method 300 comprises a step of alerting the operator, by the first data processing unit 101, by means of collision alarms, such as audio-video signals assisted by the feedback of the video unit 108, during the approach maneuver of the boat 200 to the mooring area O1, if objects 201 are detected in the first sector AS1 of the safety area AS in order to support the decision on how to continue the maneuver itself.

By way of example, in case of possible interference with external obstacles, the operator can manually perform an emergency maneuver to avoid the collision.

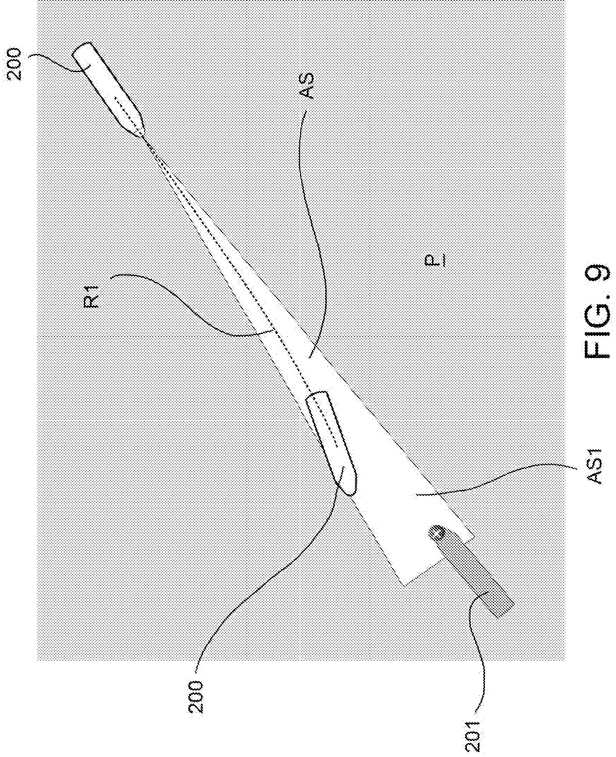

According to a further embodiment, in combination with the one above, if the operator during the approach maneuver of the boat 200 to the mooring area O1 does not recognize the aforesaid collision alarms within a set timeout, the method 300 comprises a step of automatically starting, by the first data processing unit 101, the straight emergency stop maneuver of the boat 200, so as to avoid a possible collision, as shown in a simplified manner in Figure 9.

According to a further embodiment, in combination with any of those described above, the step of controlling 300 comprises a step of continuously monitoring, by the first data processing unit 101, during the approach maneuver of the boat 200 to the mooring area O1, the feedback of the plurality of the side distance sensors of the plurality of sensors 103 in order to assist the operator in avoiding possible collisions with possible obstacles along the set course R1.

For example, the described step of monitoring phase monitors the feedback signal of the bow or stern side distance sensor to detect the presence of an obstacle at a safe distance from the boat, e.g. equal to a boat length.

According to a further embodiment, in combination with any one of those described above, the method 300 comprises a step of processing, by the first data processing unit 101, the feedback signals provided by the side distance sensors in order to determine a rate of variation of the relative distance between the boat 200 and the obstacle 201 detected by the side distance sensors based on data recorded for a set time duration (e.g., one minute) before the current instant.

According to a further embodiment, in combination with the one above, the method 300 further comprises a step of alerting the operator, by the first data processing unit 101, during the approach maneuver of the boat 200 to the mooring area O1, by means of collision alarms (e.g. audio-video signals assisted by the feedback of the video unit 108), if the aforesaid variation of the relative distance is negative and higher than the current speed of the vessel as value absolute, i.e. if the obstacle 201 in its current state of motion would interfere with the side of the boat 200 in the time needed for the boat to travel one boat length.

According to an embodiment, in combination with the one above, the method 300 comprises a step of automatically starting, by the first data processing unit 101, an emergency maneuver to avoid the possible collision if the operator during the approach maneuver of the boat 200 to the mooring area O1 does not recognize the aforesaid collision alarms within a set timeout.

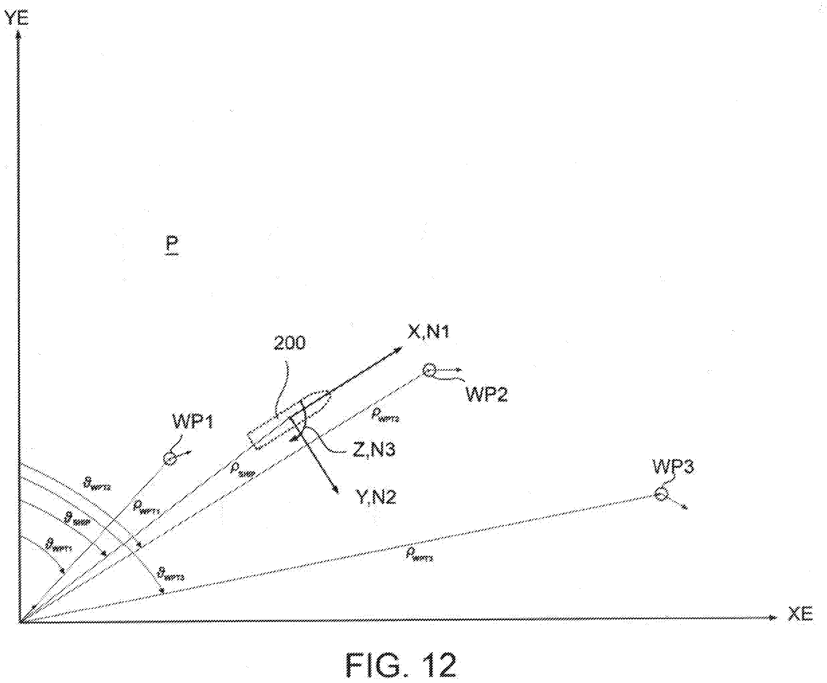

By way of example, as shown in figure 12, if the obstacle 201 is detected by a stern side distance sensor S1, the first data processing unit 101 automatically starts a crash stop with maximum steering, either to the left or starboard, respectively, according on the side of origin of the obstacle 201.

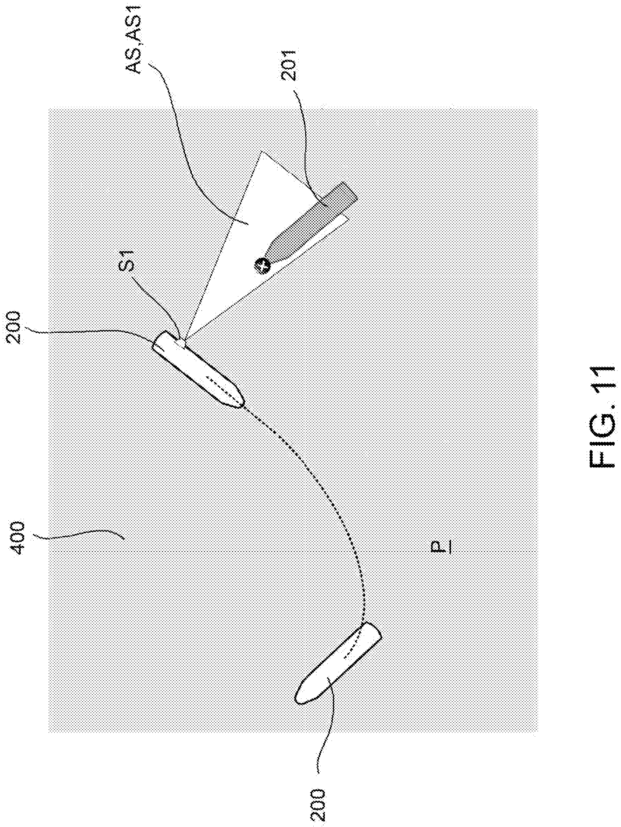

By way of example, as shown in figure 11, if the obstacle 201 is detected by a bow side distance sensor S1, the first data processing unit 101 automatically starts an approach with maximum steering either to the left or starboard, respectively, according to the side of origin of the obstacle 201, holding the current speed.

Again, according to an embodiment, in combination with any one of those described above, the step of controlling 311 is executed by applying a feedback law having a first control component of the advancement speed V of the boat 200 (speed control), a second control component of the track *ρ* of the boat 200 (track control), and a third control component of the gyration r of the boat 200 (course control).
speed control: force *FX*= feedback(*∈v*)
track control: force *FY*= feedback(*∈R*)
course control: moment *MZ*= feedback(*∈r*)

By way of example, figure 12 shows a flat geographic system (e.g. the maneuvering plane P of the port area 400), identified by an axis of the abscissa XE and an axis of the ordinate YE, to which the aforesaid components of the feedback law and the polar coordinates refer (*ρ,θ*) which describe a set course of the boat 200 during a approach maneuver of the boat 200 to the mooring area O1 along a first point WP1, a second point WP2 and a second point WP3 distributed along the set course R1.

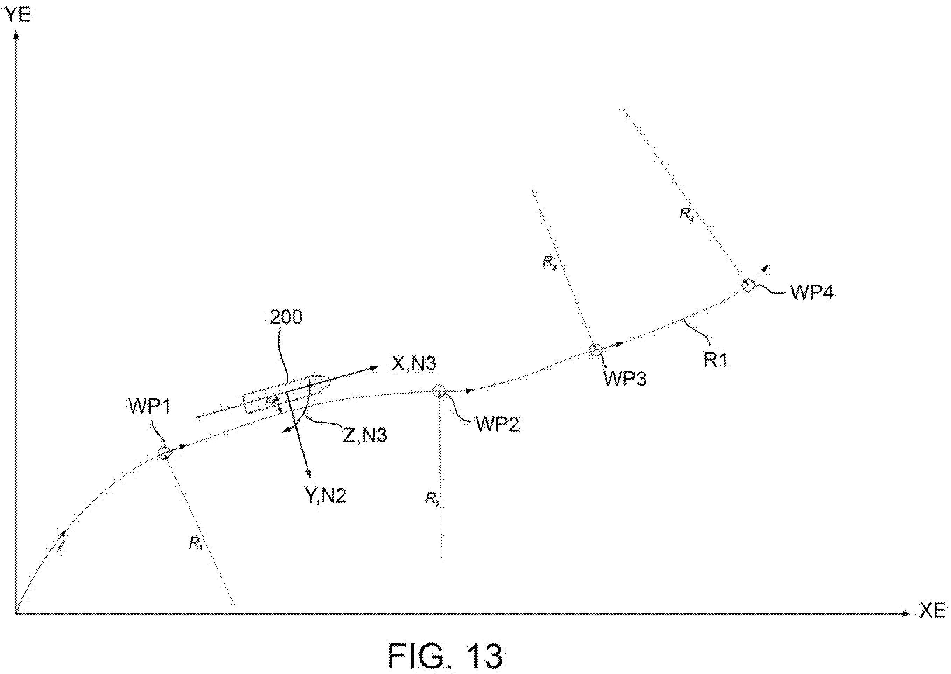

With reference to figure 13, according to an embodiment, a logic diagram is shown to allow the continuous variation of the reference values, used to calculate the error signal for the aforesaid feedback law between any pair of way points of the plurality of points WP distributed along the set course R1, mutually adjacent.

In figure 13, references WP1, WP2, WP3 and WP4 identify a generic sequence of four adjacent points on the set course R1, with which the respective advancement speed vectors of the boat 200 are associated, specified in terms of the polar coordinates SOG (advancement speed with respect to land), COG (advancement direction with respect to land, referred to the geographic North).

During the step of starting of the online mode, the method 300 includes, by the first data processing unit 101, steps of:
- expressing the way points, initially specified on the digital map representative of the port area 400 in terms of geodetic longitude and latitude coordinates, in the polar coordinates (*ρ,θ*) with respect to the flat geographic reference associated with the approach maneuver of the boat 200 to the mooring area O1;
- determining the curve (course R1), which can be derived with continuity to the second degree, having as "node points" the four points WP1, WP2, WP3 and WP4 and tangent to the advancement speed vector associated with the four points WP1, WP2, WP3 and WP4;
- once the analytic expression of the aforesaid curve is known, calculating the curvilinear abscissa ℓ along the entire curvilinear stretch thus determined, from point WP1 for ℓ=0 to point WP4 for ℓ=*L*;
- analytically calculating the radius of curvature R of the aforesaid curve as a function of the curvilinear abscissa ℓ previously determined;
- determining the function *SOG*=*V*(ℓ)*,* which can be derived with continuity to the second degree, having as "nodal points" the four advancement speeds associated with the four points WP1, WP2, WP3 and WP4;
- analytically calculating the angular speed r of the boat 200 as a function of the curvilinear abscissa ℓ on the basis of the formula: *r*(*ℓ*)=*v*(ℓ)/*R*(ℓ);
- applying the values of SOG, R and r thus determined to generate with continuity the reference values between the points WP1 and WP2;
- repeating the steps and calculations described in the sequence of points WP2, WP3, and WP4 to continuously generate reference values between WP2 and WP3 points.

In an embodiment, in combination with those described above, the global forces and moments on the boat 200 required by the aforesaid feedback law are divided on the plurality of actuators 104 available on the basis of a specific Force Allocation Logic (FAL) for the concerned boat at slow speeds (e.g. under 6 knots).

It is worth noting that in online mode, the disturbance of the environmental conditions on the approach maneuver of the boat 200 to the mooring area, in particular the wind action, is implicitly compensated by the method for supporting the approach maneuver of the boat to the mooring site of the port area by means of the effect that such disturbance applies on error signals in the aforesaid feedback law.

According to a further embodiment, in combination with the preceding one, a digital filter of the pass-low type is applied automatically to the aforesaid error signals, so as to remove the high-frequency disturbance possibly present following of residual swell in the port area 400.

With reference again to figure 3, the method 300 comprises a symbolic step of finishing ED.

It is worth noting that the object of the present invention is fully achieved.

In fact, the method and respective system for supporting for approach maneuver of a boat to the mooring site within a port area of the present invention make it possible to support the setting and automatic execution of the approach maneuver to the mooring area by a boat, within a port area, even in unfavorable wind conditions.

In particular, the described method and system, with respect to the methods and systems of the prior art, make it possible to:
- define the optimal approach maneuver to the mooring area (or site) before actually entering the port, by simulating its execution in the wind conditions expected on arrival by means of the dynamic simulation model incorporated in the system;
- automatically execute the best approach maneuver to the mooring area (or site) reproduced on the simulator and stored in the physical storage unit of the system upon arrival and entrance to the port area.

Furthermore, the present invention comprises a system for directly compensating for the environmental disturbances during the automatic mooring maneuver by means of so-called feed-forward action, i.e. by algebraically adding to the deviation error feedback concerning the course of the boat with respect to the reference values the action of the wind forces, estimated in real time on the basis of a dynamic model of the boat and of the measurements of the anemometric sensor preferentially comprised in the system.

Furthermore, the present invention preferably also comprises a system for removing the periodic fluctuations due to possible swell in the port area, from the feedback signal in order not to move the actuators unnecessarily and deteriorate the operation of the system for supporting the approach maneuver of a boat to a mooring site of a port area.

Again, the present invention preferably comprises a method of predicting the position and future arrangement of the boat, according to the dynamical simulation model thereof, in order to support the operator in manually executing the approach maneuver to increase the safety margins.

Finally, the present invention preferably comprises a method for predicting possible collisions, based on the feedback of the distance sensors, and for automatic implementing an evasive maneuver according to the dynamic simulation model of the boat.

Furthermore, the use in the method of a dynamic simulation model capable of faithfully reproducing the dynamic response of the boat, and of an automatic control system capable of executing a slow speed curvilinear maneuver with continuous variation of advancement speed intensity and direction make it possible to increase the safety, reliability and precision of the approach maneuver of a boat to a mooring area within a port area.

A person skilled in art may make changes and adaptations to the method and respective system described above or can replace elements with others which are functionally equivalent to satisfy contingent needs without departing from the scope of protection of the appended claims.

## Claims

1. A method (300) for supporting an approach maneuver of a boat (200) to a mooring site within a port area (400) along a set course (R1) from a set first position (P1) to a set second position (P2) adjacent to a mooring area (O1), comprising steps of:
- setting (301), by a first data processing unit (101) upon instructions provided by an operator by means of a control panel (102) of the first data processing unit (101), the first position (P1) and the second position (P2) of the set course (R1);
- setting (302), by the first data processing unit (101) upon instructions provided by the operator by means of a control panel (102) of the first data processing unit (101), the set course (R1), the step of setting (302) the set course (R1) comprising a step of setting (303), by the first data processing unit (101) upon instructions provided by the operator by means of the control panel (102) of the first data processing unit (101), a plurality of points (WP) distributed on the set course (R1), the distribution of the plurality of points (WP) being set as a function of a set course previously set by the operator by means of the control panel (102) of the first data processing unit (101) on the basis of his/her own seagoing experience and/or a series of information representative of the port area (400);
- simulating (305), by the first data processing unit (101) upon instructions provided by the operator by means of the control panel (102) of the first data processing unit (101), the set course (R1) of the boat (200) from the first position (P1) to the second position (P2), the step of simulating (305) being executed by implementing, by a second data processing unit (109) operatively connected to the first data processing unit (101), a dynamic simulation model configured to replicate a mooring maneuver of the boat (200) on a maneuvering plane (P) at least on the basis of set weather conditions in the port area (400);
- storing (307), by the first data processing unit (101) upon instructions provided by the operator by means of the control panel (102) of the first data processing unit (101), the simulated set course (R1) in a first storage unit operatively associated with the first data processing unit (101);
- conducting (308), by the first data processing unit (101) upon instructions provided by the operator by means of the control panel (102) of the first data processing unit (101), the boat (200) to the first position (P1) of the set course (R1);
- loading (309), by the first data processing unit (101), upon request by the operator by means of the control panel (102), the simulated set course (R1) stored in the first storage unit;
- executing (310), by the first data processing unit (101), an approach maneuver of the boat (200) to the mooring area (O1), from the first position (P1) to the second position (P2), on the basis of the set course (R1) loaded by the first data processing unit (101),
the step of executing (310) comprising a step of controlling (311), by the first data processing unit (101), the approach maneuver of the boat (200) to the mooring area (O1) by comparing the course traveled by the boat (200) with the set course (R1) loaded by the first data processing unit (101).

2. A method (300) according to claim 1, wherein the step of setting (302) the set course (R1) comprises a step of assigning (304), by the first data processing unit (101) upon instructions provided by the operator by means of the control panel (102) of the first data processing unit (101), a first value representative of the advancement speed of the boat (200) and a second value representative of the advancing direction of the boat (200) with respect to the maneuvering plane (P) to each point of the plurality of points (WP).

3. A method (300) according to any one of the preceding claims, wherein the step of simulating (305) comprises a step of providing (306), by the first data processing unit (101) upon instructions provided by the operator by means of the control panel (102) of the first data processing unit (101), the set weather conditions of the port area (400) to the second data processing unit (109) operatively connected to the first data processing unit (101).

4. A method (300) according to any one of the preceding claims, wherein the step of simulating (305) is executed by the first data processing unit (101) upon instructions provided by the operator by means of the control panel (102) of the first data processing unit (101) in offline mode before the boat (200) enters the port area (400).

5. A method (300) according to any one of the preceding claims, wherein the operator can provide instructions to the first data processing unit (101) by means of the control panel (102) to execute the simulation of the desired approach maneuver, both in real time and in accelerated time, by physically interacting with the dynamic simulation model by means of the control panel (102) of the first data processing unit (101).

6. A method (300) according to any one of the preceding claims, wherein the step of simulating (305) comprises a step of showing to the operator for a visual comparison, by the control panel (102) of the first data processing unit (101), on a digital map representative of the port area (400), the simulated approach maneuver of the boat to the mooring area (O1) with respect to the approach maneuver of the boat to the mooring area previously set on the digital map representative of the port area (400).

7. A method (300) according to any one of the preceding claims, wherein the step of simulating (305) is executed in a continuous manner by the second data processing unit (109) on the basis of the dynamic simulation model, in order to project forward in time the position and the arrangement of the boat (200) on the basis of the weather conditions and of the current controls of the boat (200).

8. A method (300) according to any one of the preceding claims, wherein the step of storing (307) the simulated set course (R1) comprises a step of storing a sequence a first value representative of the advancement speed of the boat (200) and a second value representative of the advancement direction of the boat (200) with respect to the maneuvering plane (P), representative of the simulated set course (R1).

9. A method (300) according to any one of the preceding claims, comprising a step of executing, by the first data processing unit (101), an approach maneuver of the boat (200) to the mooring area (O1) on the basis of the set course (R1) loaded by the first storage unit in offline mode.

10. A method (300) according to any one of the preceding claims, wherein the step of controlling (311) is executed, by the first data processing unit (101), in online mode, by directly controlling a plurality of actuators (104) on the basis of a track error signal in the course which can be detected when comparing the course traveled by the boat with the set course loaded by the first data processing unit (101).

11. A method (300) according to any one of the preceding claims, wherein the step of controlling (311) is executed by applying a feedback law having a first control component of the advancement speed (V) of the boat (200), a second control component of the track (*ρ*) of the boat (200), and a third control component of the gyration (r) of the boat (200).

12. A system (100) for supporting an approach maneuver of a boat (200) to a mooring site within a port area (400), the system (100) comprising:
- a first data processing unit (101);
- a first storage unit operatively connected to the first data processing unit (101);
- a control panel (102) for an operator, operatively connected to the first data processing unit (101), said operator interacting with the first data processing unit (101) by means of said control panel (102) to provide instructions and/or commands to the first data processing unit (101);
- a plurality of distance sensors (103), each of which is operatively connected to the first data processing unit (101), each distance sensor of said plurality of distance sensors (103) being configured to detect a relative distance (d) between the distance sensor (S1) and an object (201) along a direction (D1) inclined with respect to a reference axis (N1, N2) of the boat (200) by a set angle;
- a plurality of actuators (104), each of which operatively connected to the first data processing unit (101), an actuator of said plurality of actuators (104) being configured to apply one or more forces at a distance sensor of said plurality of distance sensors (103) along a force application direction inclined with respect to the reference axis (N1; N2) of the boat (200) in order to move the boat (200);
- a second data processing unit (109) operatively connected to the first data processing unit (101);
- a second storage unit operatively connected to the second data processing unit (109), the second storage unit being configured to store a dynamic simulation model, the dynamic simulation model being configured to replicate an approach maneuver of the boat (200) to a mooring area within a port area (400) on the basis of information representative of the mooring maneuver provided by an operator and of information representative of the weather conditions of the port area,
the system (100) being configured to execute the steps of the method for supporting the approach maneuver of a boat (200) to the mooring site within a port area (400) according to any one of the preceding claims.

13. A system (100) according to claim 12, wherein the second storage unit further comprises a plurality of digital maps representative of port areas within which the boat (200) may perform an approach maneuver to a respective mooring area.

14. A system (100) according to claim 13, wherein the second data processing unit (109) is configured to makes it possible to superimpose additional data manually set by the operator on a digital map representative of a port area to describe a set course to be followed during a set approach maneuver of the boat (200) to a mooring area on the basis of information provided to the boat (200) before entering the port area by the quay manager by means of communication systems installed aboard the boat (200).

15. A system (100) according to any one of the preceding claims 12 to 14, further comprising:
- at least one direction reference sensor (105) of the boat (200) with respect to a first reference axis (N1), to a second reference axis (N2), both belonging to a maneuvering plane (P) of the boat (200), and to a third reference axis (N3) orthogonal to the maneuvering plane (P) of the boat (200), the at least one direction reference sensor (105) of the boat (200) being operatively connected to the first data processing unit (101);
- at least one reference sensor (106) of the position of the boat (200) on the maneuvering plane (P), operatively connected to the first data processing unit (101);
- at least one environmental anemometric reference sensor (107) operatively connected to the first data processing unit (101);
- a video unit (108), operatively connected to the first data processing unit (101), configured to acquire a 360° view of the environment surrounding the boat (200).

## Patentansprüche

1. Verfahren (300) zum Unterstützen eines Annäherungsmanövers eines Bootes (200) an eine Anlegestelle innerhalb eines Hafenbereichs (400) entlang eines festgelegten Kurses (R1) von einer festgelegten ersten Position (P1) zu einer festgelegten zweiten Position (P2), welche einem Anlegebereich (O1) benachbart ist, umfassend die folgenden Schritte:
- Festlegen (301), durch eine erste Datenverarbeitungseinheit (101) auf Anweisungen hin, welche durch einen Bediener mittels eines Steuerungspanels (102) der ersten Datenverarbeitungseinheit (101) bereitgestellt werden, der ersten Position (P1) und der zweiten Position (P2) des festgelegten Kurses (R1);
- Festlegen (302), durch die erste Datenverarbeitungseinheit (101) auf Anweisungen hin, welche durch den Bediener mittels eines Steuerungspanels (102) der ersten Datenverarbeitungseinheit (101) bereitgestellt werden, des festgelegten Kurses (R1), wobei der Schritt eines Festlegens (302) des festgelegten Kurses (R1) einen Schritt eines Festlegens (303), durch die erste Datenverarbeitungseinheit (101) auf Anweisungen hin, welche durch den Bediener mittels des Steuerungspanels (102) der ersten Datenverarbeitungseinheit (101) bereitgestellt werden, einer Mehrzahl von Punkten (WP) umfasst, welche entlang des festgelegten Kurses (R1) verteilt sind, wobei die Verteilung der Mehrzahl von Punkten (WP) als eine Funktion eines festgelegten Kurses festgelegt wird, welcher zuvor durch den Bediener mittels des Steuerungspanels (102) der ersten Datenverarbeitungseinheit (101) auf Grundlage seiner/ihrer eigenen Seefahrtserfahrung und/oder einer Reihe von Informationen festgelegt wird, welche für den Hafenbereich (400) repräsentativ sind;
- Simulieren (305), durch die erste Datenverarbeitungseinheit (101) auf Anweisungen hin, welche durch den Bediener mittels des Steuerungspanels (102) der ersten Datenverarbeitungseinheit (101) bereitgestellt werden, des festgelegten Kurses (R1) des Bootes (200) von der ersten Position (P1) zu der zweiten Position (P2), wobei der Schritt eines Simulierens (305) durch Implementieren, durch eine zweite Datenverarbeitungseinheit (109), welche betriebsmäßig mit der ersten Datenverarbeitungseinheit (101) verbunden ist, eines dynamischen Simulationsmodells ausgeführt wird, welches dazu eingerichtet ist, ein Anlegemanöver des Bootes (200) auf einer Manövrierebene (P) wenigstens auf der Grundlage festgelegter Wetterbedingungen in dem Hafenbereich (400) nachzubilden;
- Speichern (307), durch die erste Datenverarbeitungseinheit (101) auf Anweisungen hin, welche durch den Bediener mittels des Steuerungspanels (102) der ersten Datenverarbeitungseinheit (101) bereitgestellt werden, des simulierten festgelegten Kurses (R1) in einer ersten Speichereinheit, welche der ersten Datenverarbeitungseinheit (101) betriebsmäßig zugeordnet ist;
- Leiten (308), durch die erste Datenverarbeitungseinheit (101) auf Anweisungen hin, welche durch den Bediener mittels des Steuerungspanels (102) der ersten Datenverarbeitungseinheit (101) bereitgestellt werden, des Bootes (200) zu der ersten Position (P1) des festgelegten Kurses (R1);
- Laden (309), durch die erste Datenverarbeitungseinheit (101), auf eine Anfrage durch den Bediener mittels des Steuerungspanels (102) hin, des simulierten festgelegten Kurses (R1), welcher in der ersten Speichereinheit gespeichert ist;
- Ausführen (310), durch die erste Datenverarbeitungseinheit (101), eines Annäherungsmanövers des Bootes (200) an den Anlegebereich (O1) von der ersten Position (P1) zu der zweiten Position (P2), auf Grundlage des festgelegten Kurses (R1), welcher durch die erste Datenverarbeitungseinheit (101) geladen worden ist,
wobei der Schritt eines Ausführens (310) einen Schritt eines Steuerns (311), durch die erste Datenverarbeitungseinheit (101), des Annäherungsmanövers des Bootes (200) an den Anlegebereich (O1) umfasst, indem der durch das Boot (200) gefahrene Kurs mit dem festgelegten Kurs (R1) verglichen wird, welcher durch die erste Datenverarbeitungseinheit (101) geladen worden ist.

2. Verfahren (300) nach Anspruch 1, wobei der Schritt eines Festlegens (302) des festgelegten Kurses (R1) einen Schritt eines Zuweisens (304), durch die erste Datenverarbeitungseinheit (101) auf Anweisungen hin, welche durch den Bediener mittels des Steuerungspanels (102) der ersten Datenverarbeitungseinheit (101) bereitgestellt werden, eines ersten Wertes, welcher für die Fortbewegungsgeschwindigkeit des Bootes (200) repräsentativ ist, und eines zweiten Wertes, welcher für die Fortbewegungsrichtung des Bootes (200) in Bezug auf die Manövrierebene (P) repräsentativ ist, zu jedem Punkt der Mehrzahl von Punkten (WP) umfasst.

3. Verfahren (300) nach einem der vorhergehenden Ansprüche, wobei der Schritt eines Simulierens (305) einen Schritt eines Bereitstellens (306), durch die erste Datenverarbeitungseinheit (101) auf Anweisungen hin, welche durch den Bediener mittels des Steuerungspanels (102) der ersten Datenverarbeitungseinheit (101) bereitgestellt werden, der festgelegten Wetterbedingungen des Hafenbereichs (400) an die zweite Datenverarbeitungseinheit (109) umfasst, welche betriebsmäßig mit der ersten Datenverarbeitungseinheit (101) verbunden ist.

4. Verfahren (300) nach einem der vorhergehenden Ansprüche, wobei der Schritt eines Simulierens (305) durch die erste Datenverarbeitungseinheit (101) auf Anweisungen hin, welche durch den Bediener mittels des Steuerungspanels (102) der ersten Datenverarbeitungseinheit (101) bereitgestellt werden, in einem Offline-Modus ausgeführt wird, bevor das Boot (200) in den Hafenbereich (400) eintritt.

5. Verfahren (300) nach einem der vorhergehenden Ansprüche, wobei der Bediener Anweisungen an die erste Datenverarbeitungseinheit (101) mittels des Steuerungspanels (102) bereitstellen kann, um die Simulation des gewünschten Annäherungsmanövers auszuführen, sowohl in Echtzeit als auch in beschleunigter Zeit, durch physisches Interagieren mit dem dynamischen Simulationsmodell mittels des Steuerungspanels (102) der ersten Datenverarbeitungseinheit (101).

6. Verfahren (300) nach einem der vorhergehenden Ansprüche, wobei der Schritt eines Simulierens (305) einen Schritt eines Anzeigens an den Bediener für einen visuellen Vergleich, durch das Steuerungspanel (102) der Datenverarbeitungseinheit (101), auf einer digitalen Karte, welche für den Hafenbereich (400) repräsentativ ist, des simulierten Annäherungsmanövers des Boots an den Anlegebereich (O1) in Bezug auf das Annäherungsmanöver des Boots an den Anlegebereich umfasst, welches zuvor auf der digitalen Karte festgelegt worden ist, welche für den Hafenbereich (400) repräsentativ ist.

7. Verfahren (300) nach einem der vorhergehenden Ansprüche, wobei der Schritt eines Simulierens (305) in einer kontinuierlichen Weise durch die zweite Datenverarbeitungseinheit (109) auf der Grundlage des dynamischen Simulationsmodells durchgeführt wird, um die Position und die Anordnung des Bootes (200), auf der Grundlage der Wetterbedingungen und der gegenwärtigen Steuerungen des Bootes (200), bezüglich der Zeit nach vorne zu projizieren.

8. Verfahren (300) nach einem der vorhergehenden Ansprüche, wobei der Schritt eines Speicherns (307) des simulierten festgelegten Kurses (R1) einen Schritt eines Speicherns einer Sequenz eines ersten Wertes, welcher für die Fortbewegungsgeschwindigkeit des Bootes (200) repräsentativ ist, und eines zweiten Wertes umfasst, welcher für die Fortbewegungsrichtung des Bootes (200) in Bezug auf die Manövrierebene (P) repräsentativ ist, repräsentativ für den simulierten festgelegten Kurs (R1).

9. Verfahren (300) nach einem der vorhergehenden Ansprüche, umfassend einen Schritt eines Ausführens, durch die erste Datenverarbeitungseinheit (101), eines Annäherungsmanövers des Bootes (200) an den Anlegebereich (O1), auf der Grundlage des festgelegten Kurses (R1), welcher durch die erste Speichereinheit in einem Offline-Modus geladen worden ist.

10. Verfahren (300) nach einem der vorhergehenden Ansprüche, wobei der Schritt eines Steuerns (311), durch die erste Datenverarbeitungseinheit (101), in einem Online-Modus ausgeführt wird, indem eine Mehrzahl von Aktuatoren (104) auf der Grundlage eines Spurfehlersignals in dem Kurs gesteuert wird, welches detektiert werden kann, wenn der durch das Boot gefahrene Kurs mit dem festgelegten Kurs verglichen wird, welcher durch die erste Datenverarbeitungseinheit (101) geladen worden ist.

11. Verfahren (300) nach einem der vorhergehenden Ansprüche, wobei der Schritt eines Steuerns (311) durch Anwenden eines Rückkopplungsgesetzes ausgeführt wird, welches eine erste Steuerungskomponente der Fortbewegungsgeschwindigkeit (V) des Bootes (200), eine zweite Steuerungskomponente der Spur (p) des Bootes (200) und eine dritte Steuerungskomponente der Gyration (r) des Bootes (200) aufweist.

12. System (100) zum Unterstützen eines Annäherungsmanövers eines Bootes (200) an eine Anlegestelle innerhalb eines Hafenbereichs (400), wobei das System (100) umfasst:
- eine erste Datenverarbeitungseinheit (101);
- eine erste Speichereinheit, welche betriebsmäßigt mit der ersten Datenverarbeitungseinheit (101) verbunden ist;
- ein Steuerungspanel (102) für einen Bediener, welches betriebsmäßig mit der ersten Datenverarbeitungseinheit (101) verbunden ist, wobei der Bediener mit der ersten Datenverarbeitungseinheit (101) mittels des Steuerungspanels (102) interagiert, um Anweisungen und/oder Befehle an die erste Datenverarbeitungseinheit (101) bereitzustellen;
- eine Mehrzahl von Abstandssensoren (103), von welchen jeder betriebsmäßig mit der ersten Datenverarbeitungseinheit (101) verbunden ist, wobei jeder Abstandssensor der Mehrzahl von Abstandssensoren (103) dazu eingerichtet ist, einen relativen Abstand (d) zwischen dem Abstandssensor (S1) und einem Objekt (201) entlang einer Richtung (D1) zu detektieren, welche in Bezug auf eine Referenzachse (N1, N2) des Bootes (200) um einen festgelegten Winkel geneigt ist;
- eine Mehrzahl von Aktuatoren (104), von welchen jeder betriebsmäßig mit der ersten Datenverarbeitungseinheit (101) verbunden ist, wobei ein Aktuator der Mehrzahl von Aktuatoren (104) dazu eingerichtet ist, eine oder mehrere Kräfte an einem Abstandssensor der Mehrzahl von Abstandssensoren (103) entlang einer Kraftaufbringungsrichtung aufzubringen, welche in Bezug auf die Referenzachse (N1, N2) des Bootes (200) geneigt ist, um das Boot (200) zu bewegen;
- eine zweite Datenverarbeitungseinheit (109), welche betriebsmäßig mit der ersten Datenverarbeitungseinheit (101) verbunden ist;
- eine zweite Speichereinheit, welche betriebsmäßig mit der zweiten Datenverarbeitungseinheit (109) verbunden ist, wobei die zweite Speichereinheit dazu eingerichtet ist, ein dynamisches Simulationsmodell zu speichern, wobei das dynamische Simulationsmodells dazu eingerichtet ist, ein Annäherungsmanöver des Bootes (200) an einen Anlegebereich innerhalb eines Hafenbereichs (400) auf der Grundlage von Informationen, welche für das Anlegemanöver repräsentativ sind und durch einen Bediener bereitgestellt werden, und von Informationen nachzubilden, welche für die Wetterbedingungen in dem Hafenbereich repräsentativ sind,
wobei das System (100) dazu eingerichtet ist, die Schritte des Verfahrens zum Unterstützen des Annäherungsmanövers eines Bootes (200) an die Anlegestelle innerhalb eines Hafenbereichs (400) nach einem der vorhergehenden Ansprüche auszuführen.

13. System (100) nach Anspruch 12, wobei die zweite Speichereinheit ferner eine Mehrzahl digitaler Karten umfasst, welche für Hafenbereiche repräsentativ sind, innerhalb welcher das Boot (200) ein Annäherungsmanöver an einen jeweiligen Anlegebereich durchführen kann.

14. System (100) nach Anspruch 13, wobei die zweite
Datenverarbeitungseinheit (109) dazu eingerichtet ist, es zu ermöglichen, zusätzliche Daten zu überlagern, welche manuell durch den Bediener auf einer digitalen Karte festgelegt worden sind, welche für einen Hafenbereich repräsentativ sind, um einen festgelegten Kurs zu beschreiben, welchem während eines festgelegten Annäherungsmanövers des Bootes (200) an einen Anlegebereich zu folgen ist, auf der Grundlage von Informationen, welche an das Boot (200), vor einem Eintreten in den Hafenbereich, durch den Kai-Manager mittels Kommunikationssystemen bereitgestellt worden sind, welche an Bord des Bootes (200) installiert sind.

15. System (100) nach einem der vorhergehenden Ansprüche 12 bis 14, ferner umfassend:
- wenigstens einen Richtungsreferenzsensor (105) des Bootes (200) in Bezug auf eine erste Referenzachse (N1), auf eine zweite Referenzachse (N2), welche beide zu einer Manövrierebene (P) des Bootes (200) gehören, und auf eine dritte Referenzachse (N3), welche orthogonal zu der Manövrierebene (P) des Bootes (200) ist, wobei der wenigstens eine Richtungsreferenzsensor (105) des Bootes (200) betriebsmäßig mit der ersten Datenverarbeitungseinheit (101) verbunden ist;
- wenigstens einen Referenzsensor (106) der Position des Bootes (200) auf der Manövrierebene (P), welcher betriebsmäßig mit der ersten Datenverarbeitungseinheit (101) verbunden ist;
- wenigstens einen anemometrischen Umgebungsreferenzsensor (107), welcher betriebsmäßig mit der ersten Datenverarbeitungseinheit (101) verbunden ist;
- eine Videoeinheit (108), welche betriebsmäßig mit der ersten Datenverarbeitungseinheit (101) verbunden ist und dazu eingerichtet ist, eine 360°-Ansicht der das Boot (200) umgebenden Umgebung zu erfassen.

## Revendications

1. Procédé (300) de prise en charge d'une manœuvre d'approche d'un bateau (200) sur un site d'amarrage d'une zone portuaire (400) le long d'une trajectoire (R1) définie allant d'une première position (P1) définie jusqu'à une seconde position (P2) définie adjacente à une zone d'amarrage (O1), comprenant les étapes de :
- définition (301), par une première unité de traitement de données (101), sur instructions fournies par un opérateur au moyen d'un panneau de commande (102) de la première unité de traitement de données (101), de la première position (P1) et de la seconde position (P2) de la trajectoire (R1) définie ;
- définition (302), par la première unité de traitement de données (101), sur instructions fournies par l'opérateur au moyen d'un panneau de commande (102) de la première unité de traitement de données (101), de la trajectoire (R1) définie, l'étape de définition (302) de la trajectoire (R1) définie comprenant une étape de définition (303), par la première unité de traitement de données (101) sur instructions fournies par l'opérateur au moyen du panneau de commande (102) de la première unité de traitement de données (101), d'une pluralité de points (WP) répartis sur la trajectoire (R1) définie, la répartition de la pluralité de points (WP) étant définie en tant que fonction d'une trajectoire définie précédemment par l'opérateur au moyen du panneau de commande (102) de la première unité de traitement de données (101) sur la base de sa propre expérience de navigation et/ou d'une série d'informations représentatives de la zone portuaire (400) ;
- simulation (305), par la première unité de traitement de données (101), sur instructions fournies par l'opérateur au moyen du panneau de commande (102) de la première unité de traitement de données (101), de la trajectoire (R1) définie du bateau (200) depuis la première position (P1) jusqu'à la seconde position (P2), l'étape de simulation (305) étant exécutée par la mise en œuvre, par une seconde unité de traitement de données (109) connectée de manière fonctionnelle à la première unité de traitement de données (101), d'un modèle de simulation dynamique configuré pour reproduire une manœuvre d'amarrage du bateau (200) sur un plan de manœuvre (P) au moins sur la base de conditions météorologiques définies dans la zone portuaire (400) ;
- stockage (307), par la première unité de traitement de données (101), sur instructions fournies par l'opérateur au moyen du panneau de commande (102) de la première unité de traitement de données (101), de la trajectoire (R1) définie simulée dans une première unité de stockage associée de manière fonctionnelle à la première unité de traitement de données (101);
- guidage (308), par la première unité de traitement de données (101), sur instructions fournies par l'opérateur au moyen du panneau de commande (102) de la première unité de traitement de données (101), du bateau (200) vers la première position (P1) de la trajectoire (R1) définie ;
- chargement (309), par la première unité de traitement de données (101), sur demande par l'opérateur au moyen du panneau de commande (102), de la trajectoire (R1) définie simulée stockée dans la première unité de stockage ;
- exécution (310), par la première unité de traitement de données (101), d'une manœuvre d'approche du bateau (200) sur la zone d'amarrage (O1), depuis la première position (P1) jusqu'à la seconde position (P2), sur la base de la trajectoire (R1) définie chargée par la première unité de traitement de données (101),
l'étape d'exécution (310) comprenant une étape de commande (311), par la première unité de traitement de données (101), de la manœuvre d'approche du bateau (200) sur la zone d'amarrage (O1) en comparant la trajectoire parcourue par le bateau (200) à la trajectoire (R1) définie chargée par la première unité de traitement de données (101).

2. Procédé (300) selon la revendication 1, dans lequel l'étape de définition (302) de la trajectoire (R1) définie comprend une étape d'assignation (304), par la première unité de traitement de données (101), sur instructions fournies par l'opérateur au moyen du panneau de commande (102) de la première unité de traitement de données (101), d'une première valeur représentative de la vitesse de progression du bateau (200) et d'une seconde valeur représentative de la direction de progression du bateau (200) par rapport au plan de manœuvre (P) vers chaque point de la pluralité de points (WP).

3. Procédé (300) selon l'une quelconque des revendications précédentes, dans lequel l'étape de simulation (305) comprend une étape de fourniture (306), par la première unité de traitement de données (101), sur instructions fournies par l'opérateur au moyen du panneau de commande (102) de la première unité de traitement de données (101), des conditions météorologiques définies de la zone portuaire (400) à la seconde unité de traitement de données (109) connectée de manière fonctionnelle à la première unité de traitement de données (101).

4. Procédé (300) selon l'une quelconque des revendications précédentes, dans lequel l'étape de simulation (305) est exécutée par la première unité de traitement de données (101) sur instructions fournies par l'opérateur au moyen du panneau de commande (102) de la première unité de traitement de données (101) en mode hors ligne avant que le bateau (200) n'entre dans la zone portuaire (400).

5. Procédé (300) selon l'une quelconque des revendications précédentes, dans lequel l'opérateur peut fournir des instructions à la première unité de traitement de données (101) au moyen du panneau de commande (102) pour exécuter la simulation de la manœuvre d'approche souhaitée, à la fois en temps réel et en temps accéléré, en interagissant physiquement avec le modèle de simulation dynamique au moyen du panneau de commande (102) de la première unité de traitement de données (101).

6. Procédé (300) selon l'une quelconque des revendications précédentes, dans lequel l'étape de simulation (305) comprend une étape de présentation à l'opérateur pour comparaison visuelle, par le panneau de commande (102) de la première unité de traitement de données (101), sur une carte numérique représentative de la zone portuaire (400), de la manœuvre d'approche simulée du bateau sur la zone d'amarrage (O1) par rapport à la manœuvre d'approche du bateau sur la zone d'amarrage définie précédemment sur la carte numérique représentative de la zone portuaire (400).

7. Procédé (300) selon l'une quelconque des revendications précédentes, dans lequel l'étape de simulation (305) est exécutée d'une manière continue par la seconde unité de traitement de données (109) sur la base du modèle de simulation dynamique, afin d'anticiper la position et l'agencement du bateau (200) sur la base des conditions météorologiques et des commandes actuelles du bateau (200).

8. Procédé (300) selon l'une quelconque des revendications précédentes, dans lequel l'étape de stockage (307) de la trajectoire (R1) définie simulée comprend une étape de stockage d'une séquence d'une première valeur représentative de la vitesse de progression du bateau (200) et d'une seconde valeur représentative de la direction de progression du bateau (200) par rapport au plan de manœuvre (P), représentative de la trajectoire (R1) définie simulée.

9. Procédé (300) selon l'une quelconque des revendications précédentes, comprenant une étape d'exécution, par la première unité de traitement de données (101), d'une manœuvre d'approche du bateau (200) sur la zone d'amarrage (O1) sur la base de la trajectoire (R1) définie chargée par la première unité de stockage en mode hors ligne.

10. Procédé (300) selon l'une quelconque des revendications précédentes, dans lequel l'étape de commande (311) est exécutée, par la première unité de traitement de données (101), en mode en ligne, en commandant directement une pluralité d'actionneurs (104) sur la base d'un signal d'erreur de piste de la trajectoire qui peut être détecté en comparant la trajectoire parcourue par le bateau à la trajectoire définie chargée par la première unité de traitement de données (101).

11. Procédé (300) selon l'une quelconque des revendications précédentes, dans lequel l'étape de commande (311) est exécutée en appliquant une loi de rétroaction ayant une première composante de commande de la vitesse de progression (V) du bateau (200), une deuxième composante de commande de la piste (p) du bateau (200) et une troisième composante de commande de la giration (r) du bateau (200).

12. Système (100) de prise en charge d'une manœuvre d'approche d'un bateau (200) sur un site d'amarrage d'une zone portuaire (400), le système (100) comprenant :
- une première unité de traitement de données (101) ;
- une première unité de stockage connectée de manière fonctionnelle à la première unité de traitement de données (101) ;
- un panneau de commande (102) d'un opérateur, connecté de manière fonctionnelle à la première unité de traitement de données (101), ledit opérateur interagissant avec la première unité de traitement de données (101) au moyen dudit panneau de commande (102) pour fournir des instructions et/ou des ordres à la première unité de traitement de données (101);
- une pluralité de capteurs de distance (103), chacun d'entre eux étant connecté de manière fonctionnelle à la première unité de traitement de données (101), chaque capteur de distance de ladite pluralité de capteurs de distance (103) étant configuré pour détecter une distance relative (d) entre le capteur de distance (S1) et un objet (201) le long d'une direction (D1) inclinée par rapport à un axe de référence (N1, N2) du bateau (200) d'un angle défini ;
- une pluralité d'actionneurs (104), chacun d'entre eux étant connecté de manière fonctionnelle à la première unité de traitement de données (101), un actionneur de ladite pluralité d'actionneurs (104) étant configuré pour appliquer une ou plusieurs forces au niveau d'un capteur de distance de ladite pluralité de capteurs de distance (103) le long d'une direction d'application de force inclinée par rapport à l'axe de référence (N1 ; N2) du bateau (200) afin de déplacer le bateau (200) ;
- une seconde unité de traitement de données (109) connectée de manière fonctionnelle à la première unité de traitement de données (101) ;
- une seconde unité de stockage connectée de manière fonctionnelle à la seconde unité de traitement de données (109), la seconde unité de stockage étant configurée pour stocker un modèle de simulation dynamique, le modèle de simulation dynamique étant configuré pour reproduire une manœuvre d'approche du bateau (200) sur une zone d'amarrage d'une zone portuaire (400) sur la base d'informations représentatives de la manœuvre d'amarrage fournies par un opérateur et d'informations représentatives des conditions météorologiques de la zone portuaire,
le système (100) étant configuré pour exécuter les étapes du procédé de prise en charge de la manœuvre d'approche d'un bateau (200) sur le site d'amarrage d'une zone portuaire (400) selon l'une quelconque des revendications précédentes.

13. Système (100) selon la revendication 12, dans lequel la seconde unité de stockage comprend en outre une pluralité de cartes numériques représentatives de zones portuaires dans lesquelles le bateau (200) peut réaliser une manœuvre d'approche sur une zone d'amarrage respective.

14. Système (100) selon la revendication 13, dans lequel la seconde unité de traitement de données (109) est configurée pour permettre de superposer des données supplémentaires définies manuellement par l'opérateur à une carte numérique représentative d'une zone portuaire pour décrire une trajectoire définie devant être suivie lors d'une manœuvre d'approche définie du bateau (200) sur une zone d'amarrage sur la base d'informations fournies au bateau (200) avant d'entrer dans la zone portuaire par le gestionnaire de quai au moyen de systèmes de communication installés à bord du bateau (200).

15. Système (100) selon l'une quelconque des revendications précédentes 12 à 14, comprenant en outre :
- au moins un capteur de référence de direction (105) du bateau (200) par rapport à un premier axe de référence (N1), à un deuxième axe de référence (N2), tous deux appartenant à un plan de manœuvre (P) du bateau (200), et à un troisième axe de référence (N3) orthogonal au plan de manœuvre (P) du bateau (200), le capteur de référence de direction (105) du bateau (200), au moins au nombre de un, étant connecté de manière fonctionnelle à la première unité de traitement de données (101) ;
- au moins un capteur de référence (106) de la position du bateau (200) sur le plan de manœuvre (P), connecté de manière fonctionnelle à la première unité de traitement de données (101) ;
- au moins un capteur de référence anémométrique environnemental (107) connecté de manière fonctionnelle à la première unité de traitement de données (101);
- une unité vidéo (108), connectée de manière fonctionnelle à la première unité de traitement de données (101), configurée pour acquérir une vue à 360° de l'environnement entourant le bateau (200).
